# EUROPEAN PATENT SPECIFICATION

(11) **EP 3 084 549 B1**
(45) Date of publication and mention of the grant of the patent: **28.08.2019**
(21) Application number: 13824647.5
(22) Date of filing: 19.12.2013
(51) Int. Cl.: G06F 1/16, G06F 3/0488, H04M 1/02, H04M 1/73, G06F 1/3287, H04M 1/725, G09G 3/20, G09G 3/36

(54) **TRANSMISSIVE DISPLAY WITH EXTENDED MEMORY-IN-PIXEL (MIP) REFLECTIVE PART**
DURCHLÄSSIGE ANZEIGE MIT ERWEITERTEM MEMORY-IN-PIXEL-REFLEKTIONSTEIL
AFFICHEUR TRANSMISSIF À PARTIE RÉFLÉCHISSANTE DU TYPE MIP (MÉMOIRE DANS PIXEL) ÉTENDUE

(43) Date of publication of application: 26.10.2016
(73) Proprietor: Sony Corporation, Tokyo 108-0075 (JP)
(72) Inventor: HUNT, Alexander, S-218 72 Tygelsjö (SE); SVENÉR, Johan, S-221 88 Lund (SE); JOHANSSON, Magnus, S-221 88 Lund (SE)
(74) Representative: Kraus & Weisert Patentanwälte PartGmbB
(86) International application number: PCT/IB2013/002804
(87) International publication number: WO 2015/092457

(56) References cited:
- US-A1- 2013 050 090
- US-A1- 2013 050 164
- US-A1- 2013 154 990
- US-A1- 2013 187 962

## Description

### Background Art

The usage of transmissive displays (e.g., liquid crystal display (LCD) technology and light emitting diode (LED) technology such as active-matrix organic LED (AMOLED), etc.) in the mobile device market is extensive. Transmissive displays are too power hungry to offer always-on functions (e.g., a date and time indicator, a weather indicator, etc.) or other functions that can be performed at lower power levels (e.g., power levels less than a predetermined threshold level). Therefore, there is a need to provide a modified display on a mobile device.

US 2013/154990 A1 discloses a combination of a first display area and a second display area. The first display area may be a liquid crystal display panel with a backlight (e.g. active matric LCD), and the second display area may be a reflective display panel (e.g. memory LCD or electronic paper). In a case where the first display area is in the display mode, the second display area shows icons indicating operation keys for a user to operate the display device, wherein the second display area subserves the first display area. When the first display area is in the waiting mode or the power off mode, it is possible to display, in the second display area, necessary or useful information for a user at low consumption for long hours or constantly.

US 2013/050090 A1 discloses a display incorporating reflective display technology within a touchable control area of an information handling device. The touchable control area may include a touch-based sensing layer, and may be implemented in combination with an existing display component. The touchable control area offers a reflective display in addition to the main display device. For example, touching a home tile with a home icon of the control area in a power-on state may return a user to a "home view". When the device is "powered off', the touchable control area may be updated to a persistent default reflective display.

### Summary

The invention defined in the appended independent claim 1 is directed to a system comprising a display that includes a transmissive portion and a reflective portion. The reflective portion presents at least one icon in an active mode and at least one notification in a sleep mode. The at least one icon is used for manipulating content presented on the transmissive portion. In some embodiments the at least one notification comprises at least one of a message notification, a time or date indicator, a weather indicator, a calendar, a photo, a logo, an event indicator, a moving image, or text. The system is also configured to identify contact gestures (e.g., swipes, single taps, double taps, etc.) on the surface of the reflective portion and execute functions associated with the gestures. For example, a function associated with a gesture may be to wake up the system from a sleep mode and place the system into an active mode. The display includes a first polarizing layer, a cover glass layer comprised of color filter-less glass disposed below the first polarizing layer, a thin film transistor (TFT) glass layer disposed below and in direct contact with the cover glass layer, a second polarizing layer disposed below the TFT glass layer and not extending to the reflective portion, and a backlight layer disposed below the second polarizing layer and not extending to the reflective portion.

In some embodiments, the system comprises at least one of a mobile phone, a tablet computing device, a notebook computing device, or a watch.

In some examples outside the scope of the claimed invention, the reflective portion is manufactured with color filtered glass.

In some embodiments, the reflective portion comprises at least one sub-pixel, wherein the at least one sub-pixel is associated with at least one bit memory.

In some embodiments, the reflective portion is updated with a frequency less than or equal to a frequency associated with the transmissive portion.

In some embodiments, the at least one icon comprises at least one soft-touch button.

In some embodiments, the system further comprises a hardware interface associated with both the transmissive portion and the reflective portion.

In some embodiments, the system further comprises a first hardware interface associated with the transmissive portion and a second hardware interface associated with the reflective portion.

In some embodiments, the system further comprises a cover for the display, wherein the cover enables presentation of content presented on the reflective portion.

In some embodiments, the reflective portion is located above the transmissive portion.

In some embodiments, the reflective portion is located below the transmissive portion.

In some embodiments, the reflective portion is located adjacent to the transmissive portion.

In some embodiments, there may be multiple reflective portions on the display. The reflective portions may be located above, below, or adjacent to the transmissive portion of the display.

In some embodiments, the display comprises a front lens layer, which is located on top of a touch sensor layer, which is located on top of the first polarizing layer.

In some embodiments, the system further comprises a touch panel located on top of the display.

The invention also relates to a method as defined in the appended independent claim 12.

### Brief Description of Drawings

Having thus described embodiments of the invention in general terms, reference will now be made to the accompanying drawings, where:
Figure 1 presents exemplary modes of operation associated with a display;
Figure 2 is an exemplary process flow, in accordance with embodiments of the present invention; and
Figure 3 presents an exemplary display, in accordance with embodiments of the present invention.

### Description of Embodiments

Embodiments of the present invention now may be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

The present invention is directed to extending a display. The display may be incorporated into any electronic device that requires a display (e.g., a portable mobile device such as a mobile phone, a tablet computing device, a notebook computing device, a television, a watch, etc.). According to the present invention, the display comprises two parts: a transmissive portion, and an extended reflective portion. The extended reflective portion may be referred to as just the extended portion or just the reflective portion. In one embodiment, the reflective portion is located above the transmissive portion. In another embodiment, the reflective portion is located below the transmissive portion. In yet another embodiment, the reflective portion is located adjacent to the transmissive portion. Both the transmissive portion and the extended portion may be associated with the same touch panel or different touch panels located on top of the display. In order to reduce the power budget of the display, memory-in-pixel (MIP) technology can be used for the extended portion. Since the extended portion of the display is based on reflective display technology, the extended portion does not need to have a backlight, i.e., is not associated with a backlight. Therefore, the present invention enables retention of a backlight that has the same dimensions as previous display designs. The present invention also enables power saving on a mobile device. A processor associated with the transmissive portion of the display does not need to be initiated in order to be able to view content (e.g., time, message notification, etc.) on the extended portion of the display.

In the invention, the reflective portion is configured to recognize a contact gesture (also referred to as just a gesture) on the surface of the reflective portion, and execute a function associated with the recognized gesture. For example, the gesture may be at least one of a swipe, a single touch, or a double touch. As an example, the user may swipe the reflective portion to wake up the mobile device from a sleep mode to an active mode.

A display comprises at least one pixel and, in some embodiment, more than one pixel. Each pixel comprises at least one sub-pixels and, in some embodiments, more than one sub-pixel. For example, the sub-pixels can comprise a red sub-pixel, a green sub-pixel, a blue sub-pixel, a white sub-pixel, etc. Red, green, and blue sub-pixels are present in RGB display technology. Red, green, blue, and white sub-pixels are present in RGBW display technology. The white sub-pixel does not have color filtering material and is present to enable backlight through. The memory associated with the display comprises one or more memory bits on one or more sub-pixels. Therefore, a memory bit (or one or more memory bits) may be associated with a single sub-pixel (e.g., a white sub-pixel) or one or more sub-pixels associated with a pixel. The memory can be integrated into the display driver or into backplane that is required to switch each pixel (or sub-pixel) on and off.

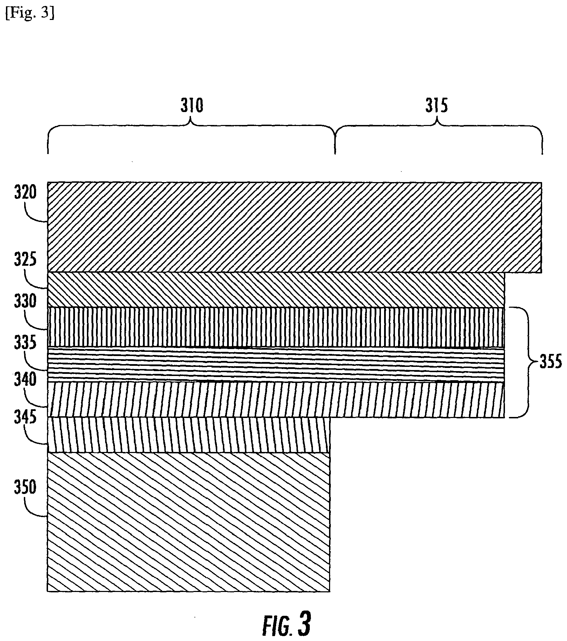

In some examples outside the scope of the invention, a color filtered glass is used for the extended portion of the display (or for the entire display). However, in the invention, a color filter-less glass is used for the extended portion of the display (or for the entire display) as the reflectance of such glass is higher and fewer pixels are needed for producing the same quality of image on the extended portion of the display. As indicated in Figure 3, the display comprises three layers: a thin film transistor (TFT) layer, a cover glass layer (either color filtered or color filter-less), and a first polarizer layer. The TFT and cover glass layers usually have widths of 0.15 mm each, and the first polarizer layer 0.10 mm. According to embodiments of the present invention, the width of each of those layers may be increased by 0.10 mm. Therefore, the thickness of the display (or just the extended portion of the display) may increase by 0.3 mm. Since this added width is located below the exterior surface of the mobile device, the added width is not visible to a user of the mobile device. The extended portion of the display is coupled (e.g., glued) to the touch panel (not shown in Figure 3) located above the display. The present invention provides space under the extended portion for components such as antennas or other components required by the design of the mobile device.

The extended portion of the display may carry always-on functionality associated with a mobile device. For example, the extended portion may display the time, date, message notification, or any other indicator that requires power less than a threshold power level. The display integrated circuit (IC) or a pixel associated with the display (memory-in-pixel) has a memory (e.g., at least one bit per pixel). Since the pixel has memory, a processor associated with the mobile device does not need to frequently (e.g., equal to or greater than a threshold number of times per period) update the extended portion of the display.

In some embodiments, the present invention provides a cover for the display. The cover protects the display and has an opening around the extended portion of the display, such that when the display is covered, content presented on the transmissive portion of the display is not visible to the user, and content presented on the reflective portion of the display is visible to the user. Therefore, the cover enables presentation of content presented on the reflective portion even though the cover covers the display (e.g., the transmissive portion of the display).

In some embodiments, a hardware interface is provided for the extended portion of the display. The interface to the extended portion of the display could be a mobile industry processor interface (MIPI) with an extended number of pixels on a framebuffer. The same hardware interface could be associated with the transmissive portion of the display or different hardware interfaces could be associated with the extended portion and the transmissive portion of the display, i.e., a first hardware interface associated with the transmissive portion and a second hardware interface associated with the reflective portion. A framebuffer is a portion of RAM comprising a bitmap that is driven to a display from a memory buffer comprising a complete frame of data. Alternatively, a separate interface (serial peripheral interface (SPI) or inter-integrated circuit (IIC)) may be provided for the extended portion of the display that has its own framebuffer for refreshing the extended portion and operates independently from the interface associated with the transmissive portion of the display. In some embodiments, the extended portion of the display is updated with the same frequency (or speed) as the main display, while in other embodiments, the extended portion is updated less frequently or more frequently than the main display. Therefore, in some embodiments the reflective portion is updated with a frequency less than or equal to the transmissive portion. For example, in an instance where a separate interface (SPI) is provided for a full high-definition (FHD) display, the frequency of updating the extended display is about 5 Mbit/s. Additionally, in some embodiments, the frequency of updating the display (or just the extended portion of the display) is selected based on a memory size associated with each pixel associated with the display (or just the extended portion of the display).

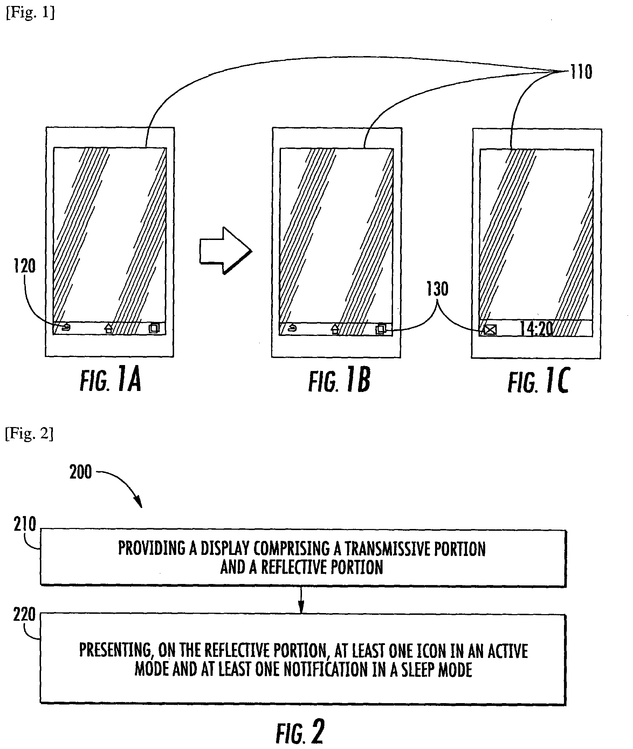

Referring now to Figure 1A, Figure 1A presents a transmissive display. The transmissive display comprises icons or soft-touch buttons 120 that are used to manipulate content presented on the transmissive portion 110 display of the display. The present invention enables the soft-touch buttons to be displayed on the extended reflective portion 130 of the display, thereby enabling more content to be viewed on the transmissive portion 110 of the display. According to the present invention, the reflective portion presents at least one icon in an active mode. In one embodiment, the at least one icon comprises at least one soft-touch button. Therefore, in the present invention, at least one icon is used for manipulating content presented on the transmissive portion. Referring now to Figure 1B, Figure 1B presents icons or soft-touch buttons being presented on the extended portion 130 of the display in an active mode (e.g., when the transmissive portion of the display is powered up (high-power mode associated with a power level greater than or equal to a threshold power) or when the user is viewing content on the transmissive portion of the display). In the sleep mode presented in Figure 1C (when the transmissive portion of the display is in a low-power mode (or off mode) when the power level is less than a threshold power), no content is presented on the transmissive portion 110 of the display. According to some embodiments of the present invention, the reflective portion presents at least one notification in a sleep mode. In the sleep mode presented in Figure 1C, notifications are presented on the extended portion 130 of the display. Notifications comprise at least one of a message notification, a time or date indicator, a weather indicator, a calendar, a photo, a logo, an event indicator, a moving image, or text. The present invention enables any content to be displayed on the extended portion of the display in active mode or in sleep mode. As shown in Figures 1B and 1C, the reflective portion is located below the transmissive portion. However, in other embodiments, the reflective portion may be located above or adjacent to (e.g., on the right side or left side of) the transmissive portion. In still other embodiments, there may be multiple reflective portions which may be located above, below, or adjacent to the transmissive portion.

Referring now to Figure 2, Figure 2 presents an exemplary process flow for presenting an image on a display. At block 210, the process flow comprises providing a display comprising a transmissive portion and a reflective portion. At block 220, the process flow comprises presenting, on the reflective portion, at least one icon in an active mode and at least one notification in a sleep mode.

Referring now to Figure 3, Figure 3 presents an exemplary display assembly. The display assembly comprises a front lens layer 320 located on top of a touch sensor layer 325, which is located on top of a first polarizer layer 330, which is located on top of a cover glass layer 335 (also referred to herein as just a cover), which is located on top of a thin film transistor (TFT) glass layer 340, which is located on top of a second polarizer layer 345, which is, in turn, located on top of a backlight layer 350. As indicated in Figure 3, a layer located on top of another layer may be in contact with that layer. Additionally, Figure 3 indicates the transmissive portion 310 and reflective portion 315 of the display assembly. In some embodiments, the comparative widths of the various layers may be represented by the widths presented in Figure 3. As indicated previously, the TFT and cover glass layers usually have widths of 0.15 mm each, and the first polarizer layer 0.10 mm. According to embodiments of the present invention, the width of each of those layers may be increased by 0.10 mm. Therefore, the thickness 355 of the display (or just the reflective portion of the display) may increase by 0.3 mm. Although not shown in Figure 3, a touch panel is located on top of and may be in contact with the front lens layer 320 of the display.

The invention is not limited to any particular types of mobile devices. As used herein, a mobile device may refer to any computing or non-computing electronic device that includes a display. Examples of mobile devices include televisions, laptop computers, smart screens, tablet computers or tablets, desktop computers, e-readers, scanners, portable media, mobile computing devices (e.g., mobile phones), image capturing devices (e.g., cameras), gaming devices, or other portable or non-portable computing or non-computing devices. The mobile device comprises a processor, a memory, and a module stored in the memory, executable by the processor, and configured to perform the various processes described herein. The processor described herein generally includes circuitry for implementing audio, visual, and/or logic functions. For example, the processor may include a digital signal processor device, a microprocessor device, and various analog-to-digital converters, digital-to-analog converters, and other support circuits. The processor may also include functionality to operate one or more software programs based at least partially on computer-executable program code portions thereof, which may be stored, for example, in a memory.

In accordance with embodiments of the invention, the term "module" with respect to a system (or a device) may refer to a hardware component of the system, a software component of the system, or a component of the system that includes both hardware and software. As used herein, a module may include one or more modules, where each module may reside in separate pieces of hardware or software.

Although many embodiments of the present invention have just been described above, the present invention may be embodied in many different forms and should not be construed as limited to the embodiments set forth herein; rather, these embodiments are provided so that this disclosure will satisfy applicable legal requirements. Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. Like numbers refer to like elements throughout.

As will be appreciated by one of ordinary skill in the art in view of this disclosure, the present invention may include and/or be embodied as an apparatus (including, for example, a system, machine, device, computer program product, and/or the like), as a method (including, for example, a business method, computer-implemented process, and/or the like), or as any combination of the foregoing. Accordingly, embodiments of the present invention may take the form of an entirely business method embodiment, an entirely software embodiment (including firmware, resident software, micro-code, stored procedures in a database, etc.), an entirely hardware embodiment, or an embodiment combining business method, software, and hardware aspects that may generally be referred to herein as a "system." Furthermore, embodiments of the present invention may involve a computer program product that includes a computer-readable storage medium having one or more computer-executable program code portions stored therein. As used herein, a processor, which may include one or more processors, may be "configured to" perform a certain function in a variety of ways, including, for example, by having one or more general-purpose circuits perform the function by executing one or more computer-executable program code portions embodied in a computer-readable medium, and/or by having one or more application-specific circuits perform the function.

It will be understood that any suitable computer-readable medium may be utilized. The computer-readable medium may include, but is not limited to, a non-transitory computer-readable medium, such as a tangible electronic, magnetic, optical, electromagnetic, infrared, and/or semiconductor system, device, and/or other apparatus. For example, in some embodiments, the non-transitory computer-readable medium includes a tangible medium such as a portable computer diskette, a hard disk, a random access memory (RAM), a read-only memory (ROM), an erasable programmable read-only memory (EPROM or Flash memory), a compact disc read-only memory (CD-ROM), and/or some other tangible optical and/or magnetic storage device. In other embodiments of the present invention, however, the computer-readable medium may be transitory, such as, for example, a propagation signal including computer-executable program code portions embodied therein.

One or more computer-executable program code portions for carrying out operations of the present invention may include object-oriented, scripted, and/or unscripted programming languages, such as, for example, Java, Perl, Smalltalk, C++, SAS, SQL, Python, Objective C, JavaScript, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Some embodiments of the present invention are described herein with reference to flowchart illustrations and/or block diagrams of apparatus and/or methods. It will be understood that each block included in the flowchart illustrations and/or block diagrams, and/or combinations of blocks included in the flowchart illustrations and/or block diagrams, may be implemented by one or more computer-executable program code portions. These one or more computer-executable program code portions may be provided to a processor of a general purpose computer, special purpose computer, and/ or some other programmable data processing apparatus in order to produce a particular machine, such that the one or more computer-executable program code portions, which execute via the processor of the computer and/or other programmable data processing apparatus, create mechanisms for implementing the steps and/or functions represented by the flowchart(s) and/or block diagram block(s).

The one or more computer-executable program code portions may be stored in a transitory and/or non-transitory computer-readable medium (e.g., a memory, etc.) that can direct, instruct, and/or cause a computer and/or other programmable data processing apparatus to function in a particular manner, such that the computer-executable program code portions stored in the computer-readable medium produce an article of manufacture including instruction mechanisms which implement the steps and/or functions specified in the flowchart(s) and/or block diagram block(s).

The one or more computer-executable program code portions may also be loaded onto a computer and/or other programmable data processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with, and/or replaced with, operator- and/or human-implemented steps in order to carry out an embodiment of the present invention.

While certain exemplary embodiments have been described and shown in the accompanying drawings, it is to be understood that such embodiments are merely illustrative of and not restrictive on the broad invention, and that this invention is not limited to the specific constructions and arrangements shown and described, since various other changes, combinations, omissions, modifications and substitutions, in addition to those set forth in the above paragraphs, are possible. Those skilled in the art will appreciate that various adaptations, modifications, and combinations of the just described embodiments can be configured without departing from the scope of the invention. Therefore, it is to be understood that, within the scope of the appended claims, the invention may be practiced other than as specifically described herein.

## Claims

1. A system for enabling display of an image, the system comprising:
a display comprising a transmissive portion (110, 310) and a reflective portion (130, 315), wherein the reflective portion presents at least one icon (120) in an active mode and at least one notification in a sleep mode, wherein the at least one icon is used for manipulating content presented on the transmissive portion, and wherein the reflective portion is configured to recognize a gesture on a surface of the reflective portion, and to execute a function associated with the gesture,
**characterised in that** the display includes:
a first polarizing layer (330);
a cover glass layer (335) comprised of color filter-less glass disposed below the first polarizing layer;
a thin film transistor (TFT) glass layer (340) disposed below and in direct contact with the cover glass layer;
a second polarizing layer (345) disposed below the TFT glass layer and not extending to the reflective portion (130, 315); and
a backlight layer (350) disposed below the second polarizing layer and not extending to the reflective portion (130, 315).

2. The system of claim 1, wherein the notification comprises at least one of a message notification, a time or date indicator, a weather indicator, a calendar, a photo, a logo, an event indicator, a moving image, text.

3. The system of claim 1, wherein the system comprises at least one of a mobile phone, a tablet computing device, a notebook computing device, or a watch.

4. The system of claim 1, wherein the reflective portion (130, 315), comprises at least one sub-pixel, wherein the at least one sub-pixel is associated with at least one bit memory.

5. The system of claim 1, wherein the reflective portion (130, 315), is updated with a frequency less than or equal to the transmissive portion (110, 310).

6. The system of claim 1, wherein the at least one icon comprises at least one soft-touch button.

7. The system of claim 1, further comprising either a hardware interface associated with both the transmissive portion (110, 310) and the reflective portion (130, 315), or a first hardware interface associated with the transmissive portion (110, 310) and a second hardware interface associated with the reflective portion (130, 315).

8. The system of claim 1, further comprising a cover for the display, wherein the cover enables presentation of content presented on the reflective portion (130, 315).

9. The system of claim 1, wherein the reflective portion (130, 315), is located above the transmissive portion (110, 310) or below the transmissive portion (110, 310).

10. The system of claim 1, wherein the reflective portion (130, 315), is located vertically adjacent to the transmissive portion (110, 310).

11. The system of claim 1, further comprising a touch panel located on top of the first polarizing layer (330).

12. A method (200) for enabling display of an image, the method comprising:
providing (210) a display comprising a transmissive portion (110, 310) and a reflective portion (130, 315), and
presenting (220), on the reflective portion, at least one icon (120) in an active mode and at least one notification in a sleep mode, wherein the at least one icon is used for manipulating content presented on the transmissive portion, and wherein the reflective portion is configured to recognize a gesture on a surface of the reflective portion and execute a function associated with the gesture,
**characterised in that** the display includes:
a first polarizing layer (330),
a cover glass layer (335) comprised of color filter-less glass disposed below the first polarizing layer,
a thin film transistor (TFT) glass layer (340) disposed below and in direct contact with the cover glass layer,
a second polarizing layer (345) disposed below the TFT glass layer and not extending to the reflective portion (130, 315), and
a backlight layer (350) disposed below the second polarizing layer and not extending to the reflective portion (130, 315).

## Patentansprüche

1. System zum Ermöglichen der Anzeige eines Bildes, wobei das System Folgendes umfasst:
eine Anzeige, umfassend einen durchlässigen Abschnitt (110, 310) und einen reflektierenden Abschnitt (130, 315), wobei der reflektierende Abschnitt mindestens ein Symbol (120) in einem aktiven Modus und mindestens eine Benachrichtigung in einem Ruhemodus aufweist, wobei das mindestens eine Symbol zum Bearbeiten von Inhalten verwendet wird, die auf dem durchlässigen Abschnitt dargestellt sind, und wobei der reflektierende Abschnitt so konfiguriert ist, dass er eine Geste auf einer Oberfläche des reflektierenden Abschnitts erkennt und eine der Geste zugeordnete Funktion ausführt,
**dadurch gekennzeichnet, dass** die Anzeige Folgendes umfasst:
eine erste Polarisationsschicht (330);
eine Deckglasschicht (335) aus filterlosem Farbglas, die unter der ersten Polarisationsschicht angeordnet ist;
eine Dünnschichttransistor-(thin film transistor-TFT-)Glasschicht (340), die unter und in direktem Kontakt mit der Deckglasschicht angeordnet ist;
eine zweite Polarisationsschicht (345), die unter der TFT-Glasschicht angeordnet ist und sich nicht zum reflektierenden Abschnitt (130, 315) erstreckt; und
eine Hintergrundbeleuchtungsschicht (350), die unter der zweiten Polarisationsschicht angeordnet ist und sich nicht zum reflektierenden Abschnitt (130, 315) erstreckt.

2. System nach Anspruch 1, wobei die Benachrichtigung mindestens eines von einer Nachrichtenbenachrichtigung, einer Zeit- oder Datumsanzeige, einer Wetteranzeige, einem Kalender, einem Foto, einem Logo, einer Ereignisanzeige, einem Bewegtbild, Text umfasst.

3. System nach Anspruch 1, wobei das System mindestens eines von einem Mobiltelefon, einer Tablet-Rechenvorrichtung, einer Notebook-Rechenvorrichtung oder einer Uhr umfasst.

4. System nach Anspruch 1, wobei der reflektierende Abschnitt (130, 315) mindestens ein Teilpixel umfasst, wobei das mindestens eine Teilpixel mindestens einem Bitspeicher zugeordnet ist.

5. System nach Anspruch 1, wobei der reflektierende Abschnitt (130, 315) mit einer Frequenz aktualisiert wird, die kleiner oder gleich dem durchlässigen Abschnitt (110, 310) ist.

6. System nach Anspruch 1, wobei das mindestens eine Symbol mindestens eine Soft-Touch-Taste umfasst.

7. System nach Anspruch 1, ferner umfassend entweder eine Hardwareschnittstelle, die sowohl dem durchlässigen Abschnitt (110, 310) als auch dem reflektierenden Abschnitt (130, 315) zugeordnet ist, oder eine erste Hardwareschnittstelle, die dem durchlässigen Abschnitt (110, 310) zugeordnet ist, und eine zweite Hardwareschnittstelle, die dem reflektierenden Abschnitt (130, 315) zugeordnet ist.

8. System nach Anspruch 1, das ferner eine Abdeckung für die Anzeige umfasst, wobei die Abdeckung die Darstellung von Inhalten ermöglicht, die auf dem reflektierenden Abschnitt (130, 315) dargestellt werden.

9. System nach Anspruch 1, wobei der reflektierende Abschnitt (130, 315) über dem durchlässigen Abschnitt (110, 310) oder unter dem durchlässigen Abschnitt (110, 310) angeordnet ist.

10. System nach Anspruch 1, wobei der reflektierende Abschnitt (130, 315) vertikal benachbart zum durchlässigen Abschnitt (110, 310) angeordnet ist.

11. System nach Anspruch 1, das ferner ein Berührungsfeld umfasst, das auf der ersten Polarisationsschicht (330) angeordnet ist.

12. Verfahren (200) zum Ermöglichen der Anzeige eines Bildes, wobei das Verfahren Folgendes umfasst:
Bereitstellen (210) einer Anzeige, die einen durchlässigen Abschnitt (110, 310) und einen reflektierenden Abschnitt (130, 315) umfasst, und
Darstellen (220) mindestens eines Symbols (120) in einem aktiven Modus und mindestens einer Benachrichtigung in einem Ruhemodus auf dem reflektierenden Abschnitt, wobei das mindestens eine Symbol zum Bearbeiten von auf dem durchlässigen Abschnitt dargestellten Inhalten verwendet wird und wobei der reflektierende Abschnitt konfiguriert ist, um eine Geste auf einer Oberfläche des reflektierenden Abschnitts zu erkennen und eine der Geste zugeordnete Funktion auszuführen,
**dadurch gekennzeichnet, dass** die Anzeige Folgendes umfasst:
eine erste Polarisationsschicht (330),
eine Deckglasschicht (335) aus filterlosem Farbglas, die unter der ersten Polarisationsschicht angeordnet ist,
eine Dünnschichttransistor-(thin film transistor-TFT-)Glasschicht (340), die unter und in direktem Kontakt mit der Deckglasschicht angeordnet ist,
eine zweite Polarisationsschicht (345), die unter der TFT-Glasschicht angeordnet ist und sich nicht zum reflektierenden Abschnitt (130, 315) erstreckt, und
eine Hintergrundbeleuchtungsschicht (350), die unter der zweiten Polarisationsschicht angeordnet ist und sich nicht zum reflektierenden Abschnitt (130, 315) erstreckt.

## Revendications

1. Système destiné à permettre l'affichage d'une image, le système comprenant :
un écran comprenant une partie transmissive (110, 310) et une partie réfléchissante (130, 315), dans lequel la partie réfléchissante présente au moins une icone (120) en mode actif et au moins une notification en mode de veille, dans lequel l'au moins une icône est utilisée pour manipuler un contenu présenté sur la partie transmissive, et dans lequel la partie réfléchissante est configurée pour reconnaître un geste sur une surface de la partie réfléchissante, et pour exécuter une fonction associée au geste,
**caractérisé en ce que** l'écran comprend :
une première couche de polarisation (330) ;
une couche de verre de revêtement (335) composée de verre sans filtre couleur disposé sous la première couche de polarisation ;
une couche de verre à transistor à couches minces (TFT) (340) disposée sous et en contact direct avec la couche de verre de revêtement ;
une seconde couche de polarisation (345) disposée sous la couche de verre TFT et qui ne s'étend pas jusqu'à la partie réfléchissante (130, 315) ; et
une couche de rétroéclairage (350) disposée sous la seconde couche de polarisation et qui ne s'étend pas jusqu'à la partie réfléchissante (130, 315).

2. Système selon la revendication 1, dans lequel la notification comprend au moins l'un d'une notification de message, d'un indicateur de date ou d'heure, d'un indicateur météorologique, d'un calendrier, d'une photo, d'un logo, d'un indicateur d'évènement, d'une image en mouvement, d'un texte.

3. Système selon la revendication 1, où le système comprend au moins l'un d'un téléphone mobile, d'une tablette, d'un ordinateur portable, ou d'une montre.

4. Système selon la revendication 1, dans lequel la partie réfléchissante (130, 315) comprend au moins un sous-pixel, dans lequel l'au moins un sous-pixel est associé à au moins une mémoire binaire.

5. Système selon la revendication 1, dans lequel la partie réfléchissante (130, 315) est actualisée avec une fréquence inférieure ou égale à la partie transmissive (110, 310).

6. Système selon la revendication 1, dans lequel l'au moins une icône comprend au moins une touche tactile.

7. Système selon la revendication 1, comprenant en outre soit une interface matérielle associée à la fois à la partie transmissive (110, 310) et à la partie réfléchissante (130, 315), soit une première interface matérielle associée à la partie transmissive (110, 310) et une seconde interface matérielle associée à la partie réfléchissante (130, 315).

8. Système selon la revendication 1, comprenant en outre un capot destiné à l'écran, dans lequel le capot permet la présentation d'un contenu présenté sur la partie réfléchissante (130, 315).

9. Système selon la revendication 1, dans lequel la partie réfléchissante (130, 315) est située au-dessus de la partie transmissive (110, 310) ou sous la partie transmissive (110, 310).

10. Système selon la revendication 1, dans lequel la partie réfléchissante (130, 315) est située de manière verticalement adjacente à la partie transmissive (110, 310) .

11. Système selon la revendication 1, comprenant en outre un panneau tactile situé sur le dessus de la première couche de polarisation (330).

12. Procédé (200) destiné à permettre l'affichage d'une image, le procédé comprenant les étapes consistant à :
fournir (210) un écran comprenant une partie transmissive (110, 310) et une partie réfléchissante (130, 315), et
présenter (220), sur la partie réfléchissante, au moins une icône (120) en mode actif et au moins une notification en mode de veille, où l'au moins une icône est utilisée pour manipuler un contenu présenté sur la partie transmissive, et où la partie réfléchissante est configurée pour reconnaître un geste sur une surface de la partie réfléchissante et pour exécuter une fonction associée au geste,
**caractérisé en ce que** l'écran comprend :
une première couche de polarisation (330),
une couche de verre de revêtement (335) composée de verre sans filtre couleur disposé sous la première couche de polarisation,
une couche de verre à transistor à couches minces (TFT) (340) disposée sous et en contact direct avec la couche de verre de revêtement,
une seconde couche de polarisation (345) disposée sous la couche de verre TFT et qui ne s'étend pas jusqu'à la partie réfléchissante (130, 315), et
une couche de rétroéclairage (350) disposée sous la seconde couche de polarisation et qui ne s'étend pas jusqu'à la partie réfléchissante (130, 315).
